# EUROPEAN PATENT APPLICATION

(11) **EP 4 746 132 A1**
(43) Date of publication of application: **20.05.2026**
(21) Application number: 25739093.0
(22) Date of filing: 09.01.2025
(51) Int. Cl.: H01M 10/6551, H01M 10/653, H01M 10/613, H01M 50/186

(54) **BATTERY PACK**

(30) Priority: 12.01.2024 KR 20240005409
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR)
(74) Representative: BCKIP Part mbB
(86) International application number: PCT/KR2025/000515
(87) International publication number: WO 2025/150928

(57) **Abstract**

According to exemplary embodiments, a battery pack is provided. The battery pack comprises: a pack housing including a base plate and side walls; a plurality of battery cell assemblies arranged on the base plate; a plurality of first thermal interface material (TIM) layers interposed between the plurality of battery cell assemblies and the pack housing; a lead coupled to the side walls; and second TIM layers interposed between the lead and the plurality of battery cell assemblies, wherein each of the plurality of battery cell assemblies comprises a plurality of battery cells arranged along a first direction, and a plurality of cooling fins interposed between the plurality of battery cells and having an L-shape.

## Description

### Technical Field

The present disclosure relates to a battery pack. The present application claims the benefit of priority based on Korean Patent Application No. 10-2024-0005409, filed on January 12, 2024, and the entire contents of the Korean patent application is incorporated herein by reference.

### Background Art

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

In a current trend toward emphasizing secondary batteries for mobility, the development of secondary battery technology is mainly aimed to reduce production costs and improve safety. A secondary battery account for a largest portion of manufacturing costs of a BEV. Therefore, a most important factor in increasing the share of BEVs compared to internal combustion engine vehicles is production costs of secondary batteries. Production costs can be reduced by reducing raw materials, reducing the number of steps in a production process, and reducing a tact time. The safety of a secondary battery is directly related to the lives of occupants of mobility and thus is very important. A key task to enhance the safety of a secondary battery is to provide a cooling solution for a battery pack.

### Disclosure

### Technical Problem

The present disclosure is directed to providing a battery pack with improved cooling efficiency.

### Technical Solution

Embodiments of the present disclosure provide a battery pack. The battery pack includes a pack housing including a base plate and side walls, a plurality of battery cell assemblies on the base plate, a plurality of first thermal interface material (TIM) layers between the plurality of battery cell assemblies and the pack housing, a lid coupled to the side walls, and second TIM layers between the lid and the plurality of battery cell assemblies, and each of the plurality of battery cell assemblies includes a plurality of battery cells arranged in a first direction and a plurality of cooling fins provided between the plurality of battery cells and each having an L-shape.

Each of the plurality of cooling fins may include a first part perpendicular to the first direction and a second part connected to the first part and parallel to the first direction.

A length of the second part of each of the plurality of cooling fins in the first direction may be different from a length of the plurality of battery cells in the first direction.

The length of the second part of each of the plurality of cooling fins in the first direction may be less than the length of the plurality of battery cells in the first direction.

The length of the second part of each of the plurality of cooling fins in the first direction may be greater than the length of the plurality of battery cells in the first direction.

The length of the second part of each of the plurality of cooling fins in the first direction may be less than twice the length of the plurality of battery cells in the first direction.

The second TIM layers may be in contact with the lid and the second part of the plurality of cooling fins of the plurality of battery cell assemblies.

The second part of the plurality of cooling fins may be spaced apart from the lid with the second TIM layers interposed therebetween.

Each of the plurality of battery cells may include a terrace that is a sealed part, and the plurality of cooling fins may cover the terrace of a corresponding one of the plurality of battery cells.

The terrace of each of the plurality of battery cells may be spaced apart from the second TIM layers.

Each of the plurality of cooling fins may include aluminum or stainless steel.

Each of the plurality of cooling fins may be fixed to a corresponding one of the plurality of battery cells via an adhesive.

A shape of each of the plurality of cooling fins may be different from a C-shape.

Each of the plurality of cooling fins may be spaced apart from the base plate.

Each of the plurality of cooling fins may be spaced apart from the first TIM layers.

### Advantageous Effects

According to embodiments of the present disclosure, an air layer can be prevented from being formed between TIM layers and battery cells using a plurality of cooling fins, and the cooling efficiency of a battery pack can be improved.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### Brief Description of the Drawings

FIG. 1 is a plan view for describing a battery pack according to embodiments.
FIG. 2 is an exploded perspective view of a battery pack according to embodiments.
FIG. 3 is a perspective view of a battery cell assembly according to embodiments.
FIG. 4 is a cross-sectional view taken along line 3I-3I' of FIG. 3.
FIG. 5 is an enlarged partial cross-sectional view of a part of FIG. 4.
FIG. 6 is a cross-sectional view for describing a battery cell assembly according to other embodiments.
FIG. 7 is a flowchart of a method of assembling a battery pack according to other embodiments.
FIG. 8 is a perspective view for describing a method of assembling a battery pack according to other embodiments.
FIG. 9 illustrates a battery cell assembly according to other embodiments.
FIG. 10 is a cross-sectional view taken along line 9I-9I' of FIG. 9.
FIG. 11 is an enlarged partial cross-sectional view of a part of FIG. 10.

### Best Mode

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

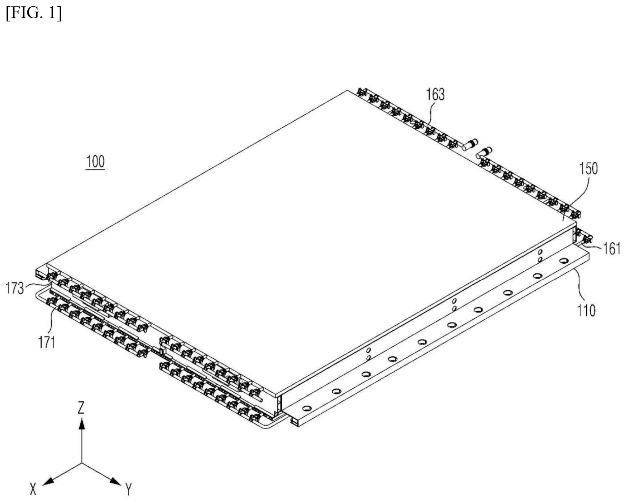

FIG. 1 is a perspective view for describing a battery pack 100 according to embodiments.

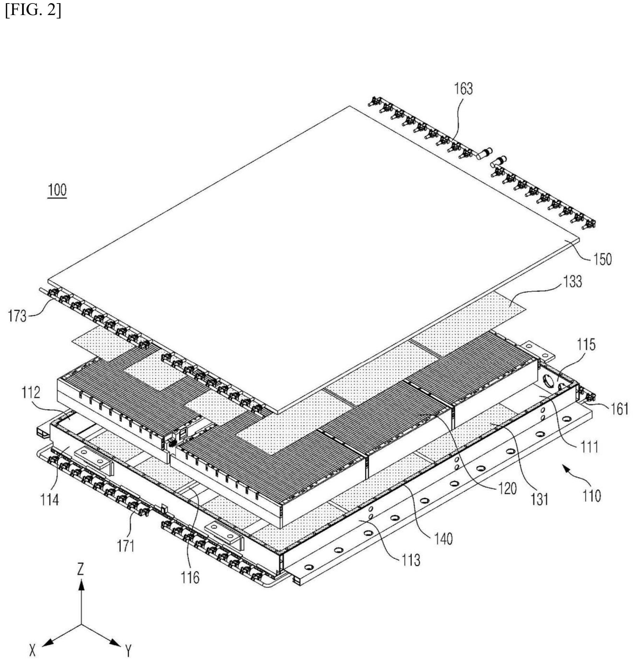

FIG. 2 is an exploded perspective view of the battery pack 100 according to embodiments.

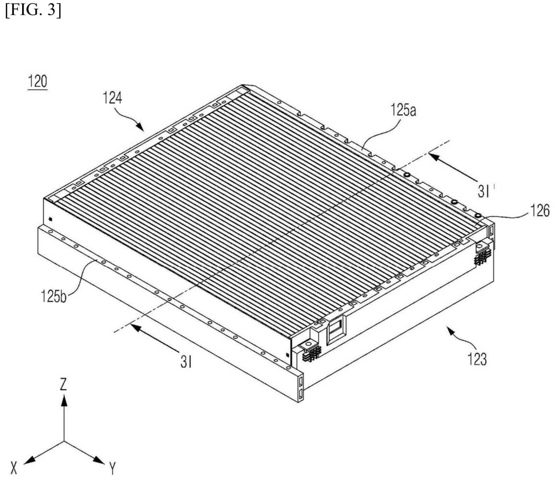

FIG. 3 is a perspective view of a battery cell assembly 120 according to embodiments.

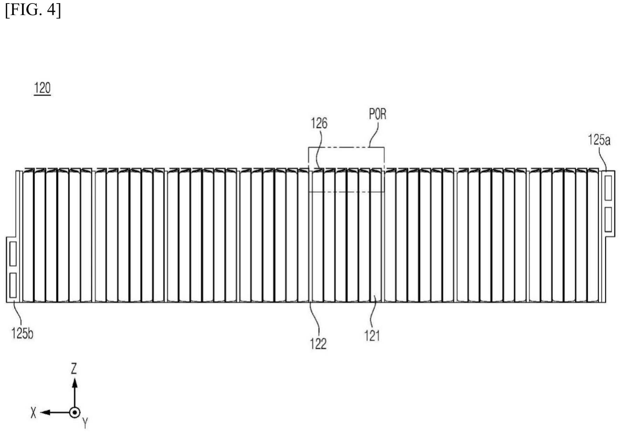

FIG. 4 is a cross-sectional view taken along line 3I-3I' of FIG. 3.

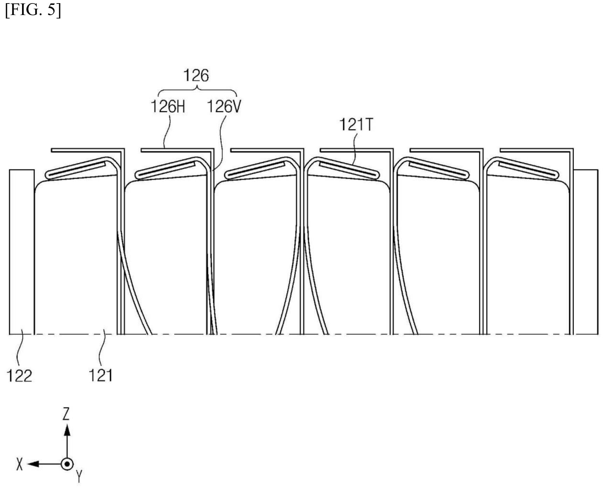

FIG. 5 is an enlarged partial cross-sectional view of a part POR of FIG. 4.

Referring to FIGS. 1 to 5, the battery pack 100 may include a housing 110, a plurality of battery cell assemblies 120, first thermal interface material (TIM) layers 131, second TIM layers 133, a gasket 140, a lid 150, a lower injection pipe 161, an upper injection pipe 163, a lower recovery pipe 171, and an upper recovery pipe 173. The battery pack 100 is a final form of a battery system to be mounted in a mobility or the like.

The housing 110 may provide a space for arranging the plurality of battery cell assemblies 120 therein. The housing 110 may include a base plate 111, side walls 112, 113, 114, and 115, and a center beam 116.

Here, two directions substantially parallel to a mounting surface of the base plate 111 are defined as an X-axis direction and a Y-axis direction, and a direction substantially perpendicular to the mounting surface of the base plate 111 is defined as a Z-axis direction. The X-axis direction, the Y-axis direction, and the Z-axis direction may be substantially perpendicular to one another. Unless otherwise mentioned, the definition of the directions will apply to the following drawings.

Each of the base plate 111 and the side walls 112 and 113 may be provided by an extrusion process. An extrusion direction of each of the base plate 111 and the side walls 112 and 113 may be the X-axis direction. The base plate 111 and the side walls 112 and 113 may be arranged in the Y-axis direction. The side walls 114 and 115 may also be provided by the extrusion process.

According to embodiments, the base plate 111 and the side walls 112 and 113 may be coupled by friction stir welding. The base plate 111 may include a plurality of unit plates coupled to each other by friction stir welding.

The pack housing 110 may include a center beam 116. The center beam 116 may extend in the X-axis direction. The center beam 116 may be interposed between the side walls 112 and 113. The center beam 116 may be included in a center plate disposed at a center of the plurality of unit plates coupled together by friction stir welding. Accordingly, the center beam 116 may be formed together with the center plate by the extrusion process and may be an element integrally formed with the center plate.

The base plate 111 may include a plurality of cooling channels. The plurality of cooling channels may provide a passage for moving, for example, a coolant such as water. The plurality of cooling channels may be formed by the extrusion process. The plurality of cooling channels may extend in the X-axis direction. The plurality of cooling channels may be spaced apart from each other in the Y-axis direction.

The cooling channels of the base plate 111 may be connected to the lower injection pipe 161 and the lower recovery pipe 171. A cooling fluid supplied from the lower injection pipe 161 may flow through the cooling channels and be recovered by the lower recovery pipe 171.

The plurality of battery cell assemblies 120 may be on the base plate 111 of the housing 110. The base plate 111 may support the plurality of battery cell assemblies 120. The side walls 112, 113, 114, and 115 may horizontally surround the plurality of battery cell assemblies 120.

The first TIM layers 131 may be interposed between the plurality of battery cell assemblies 120 and the base plate 111. The first TIM layers 131 may include a resin composition. The first TIM layers 131 may be provided by a process of applying a thermal resin. The first TIM layers 131 may prevent an air layer from being formed between the base plate 111 and battery cells 121, thereby promoting cooling of the plurality of battery cell assemblies 120. The first TIM layers 131 may be in contact with the battery cells 121 of the plurality of battery cell assemblies 120 and the base plate 111.

The resin composition may be a composition that is curable at room temperature. That is, a curing reaction of the resin composition may start and proceed at room temperature. The curing reaction of the resin composition may be promoted at a temperature higher than room temperature. A curing reaction rate of the resin composition at a temperature higher than room temperature may be higher than a curing reaction rate of the resin composition at room temperature. As a non-limiting example, a major component of the resin composition may be a silicon resin, a polyol resin, an epoxy resin, or an acrylic resin.

Each of the plurality of battery cell assemblies 120 may include a plurality of battery cells 121, a plurality of pads 122, a first circuit assembly 123, a second circuit assembly 124, a first cross-beam 125a, a second cross-beam 125b, and a plurality of cooling fins 126.

Each of the plurality of battery cells 121 may be a lithium ion battery. Each of the plurality of battery cells 121 includes an electrode assembly, an electrolyte, and a case. Each of the plurality of battery cells 121 may be a cylindrical battery cell, a prismatic battery cell, or a pouch type battery cell. A case of the cylindrical battery cell may be a cylindrical metal can. An electrode assembly of the cylindrical battery cell is embedded in the cylindrical metal can. A case of the prismatic batteries cell may be a prismatic metal case. An electrode assembly of the prismatic battery cell is embedded in the prismatic metal can. A case of the pouch type battery cell may be a pouch sheet. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

The plurality of battery cells 121 may form a plurality of banks. Each of the plurality of banks may include one or more battery cells 121. The one or more battery cells 121 of each of the plurality of banks may be connected with each other in parallel. The plurality of banks may be connected to each other in series. The number of banks connected in series and the number of battery cells 121 included in the plurality of banks may be determined according to a voltage and a current to be output from each of the battery cell assemblies 120.

The plurality of pads 122 may be interposed between the plurality of battery cells 121. The plurality of pads 122 may horizontally press the plurality of battery cells 121 and absorb a width change in the X-axis direction due to the swelling of the plurality of battery cells 121. The plurality of pads 122 may isolate the plurality of battery cells 121 from each other. According to embodiments, each of the plurality of battery cells 121 may include polyurethane (PU). According to embodiments, each of the plurality of battery cells 121 may include a refractory material such as silicone.

According to embodiments, each of the plurality of pads 122 and two banks may be alternately arranged. According to embodiments, two of the plurality of banks may be interposed between neighboring pads 122. According to other embodiments, only one bank or three or more banks may be interposed between neighboring pads 122.

The first integrated circuit assembly 123 and the second integrated circuit assembly 124 may be spaced apart from each other in the Y-axis direction with the plurality of battery cells 121 interposed therebetween. The first integrated circuit assembly 123 may include an insulating frame, an integrated circuit, bus bars, and an insulating cover. The second integrated circuit assembly 124 may include an insulating frame, an integrated circuit, and an insulating cover. The second integrated circuit assembly 124 is substantially the same as the first integrated circuit assembly 123, except that the second integrated circuit assembly 124 does not include bus bars.

The insulating frame may include an insulating material such as plastic. The insulating frame may cover front sides of the plurality of battery cells 121. The insulating frame may support the integrated circuit, the bus bars and sensing plates.

The bus bars may be short-circuited with positive electrode leads of one or more battery cells 121 of a first bank and negative electrode leads of one or more battery cells 121 of a last bank. The bus bars may be welded to the positive electrode leads of the one or more battery cells 121 of the first bank and the negative electrode leads of the one or more battery cells 121 of the last bank. Resulting voltages of the plurality of battery cells 121 may be output through the bus bars. The bus bars may be fixed to the insulating frame.

The integrated circuit may be mounted on the insulating frame. The positive electrode leads and the negative electrode leads that are welded together may form nodes inside the battery cell assembly 120. The integrated circuit may be configured to measure voltages of the nodes.

The insulating cover may include an insulating material such as plastic. The insulating cover may be interference-fitted into the insulating frame. The insulating cover may cover the integrated circuit and thus electrical elements of the first integrated circuit assembly 123 may be protected.

The first cross-beam 125a and the second cross-beam 125b of each of the battery cell assemblies 120 may be spaced apart from each other with the plurality of battery cells 121 interposed therebetween. The first cross-beam 125a and the second cross-beam 125b may cover the plurality of battery cells 121. The first cross-beam 125a and the second cross-beam 125b may horizontally support the plurality of battery cells 121. The first cross-beam 125a and the second cross-beam 125b may be fixed to the plurality of battery cells 121 via an adhesive material or the like.

According to embodiments, the first cross-beam 125a and the second cross-beam 125b may have different and complementary shapes. For example, the second cross-beam 125b of each of the battery cell assemblies 120 may be coupled to the first cross-beam 125a of a subsequent battery cell assembly 120 among the other battery cell assemblies 120. For example, the second cross-beam 125b of the battery cell assembly 120 may be coupled to the first cross-beam 125a of the battery cell assembly 120.

The first cross-beam 125a and the second cross-beam 125b that are coupled to each other may form a cross-beam assembly. The first cross-beam 125a and the second cross-beam 125b of each of cross-beam assemblies may be engaged with each other. The first cross-beam 125a and the second cross-beam 125b of each of the cross-beam assemblies may be in contact with each other. Each of the cross-beam assemblies may extend in the Y-axis direction.

The first cross-beam 125a of a battery cell assembly 120 adjacent to the side wall 114 may be coupled to a supporting beam on the base plate 111. The second cross-beam 125b of a battery cell assembly 120 adjacent to the side wall 115 may be coupled to a supporting beam on the second cross-beam 125b. Similarly, the first cross-beam 125a of the battery cell assembly 120 adjacent to the side wall 115 may be coupled to the supporting beam on the base plate 111. The second cross-beam 125b of the battery cell assembly 120 adjacent to the side wall 115 may be coupled to the supporting beam on the second cross-beam 125b.

Each of the plurality of cooling fins 126 may have high thermal conductivity. Each of the plurality of cooling fins 126 may include, for example, a metal material such as aluminum and stainless steel.

Each of the plurality of cooling fins 126 may have an L-shape. The shape of each of the plurality of cooling fins 126 may be different from a C-shape. Each of the plurality of cooling fins 126 may include a first part 126V substantially perpendicular to the X-axis direction and a second part 126H substantially parallel to the X-axis direction. The second part 126H may be connected to the first part 126V. The first part 126V of each of the plurality of cooling fins 126 may be substantially parallel to the Z-axis direction. The second part 126H of each of the plurality of cooling fins 126 may be substantially perpendicular to the Z-axis direction.

The second part 126H and the first part 126V may extend in the Y-axis direction. The second part 126H of each of the plurality of cooling fins 126 may guide a high-temperature gas and flames, which are discharged from the plurality of battery cells 121, in the Y-axis direction when a thermal runaway event occurs. Accordingly, it is possible to prevent propagation of the thermal runaway event occurring in one of the plurality of battery cells 121 to another of the plurality of battery cells 121 and to improve the safety of the battery pack 100.

Each of the plurality of cooling fins 126 may be spaced apart from the first TIM layers 131 between the plurality of battery cells 121 and the base plate 111. Each of the plurality of cooling fins 126 may be spaced apart from the base plate 111. Each of the plurality of cooling fins 126 may not include a part interposed between the plurality of battery cells 121 and the base plate 111.

A length of the second part 126H of each of the plurality of cooling fins 126 in the X-axis direction may be different from a length of each of the plurality of battery cells 121 in the X-axis direction. The length of the second part 126H of each of the plurality of cooling fins 126 in the X-axis direction may be less than the length of each of the plurality of battery cells 121 in the X-axis direction. Accordingly, interference between the plurality of cooling fins 126 may be prevented when the plurality of battery cells 121 are coupled to each other.

A length of the first part 126V of each of the plurality of cooling fins 126 in the Z-axis direction may be different from a length of each of the plurality of battery cells 121 in the Z-axis direction. The length of the first part 126V of each of the plurality of cooling fins 126 in the Z-axis direction may be greater than the length of each of the plurality of battery cells 121 in the Z-axis direction but embodiments are not limited thereto. The length of the first part 126V of each of the plurality of cooling fins 126 in the Z-axis direction may be equal to or less than the length of each of the plurality of battery cells 121 in the Z-axis direction.

The plurality of cooling fins 126 may be interposed between the plurality of battery cells 121. The first part 126V of each of the plurality of cooling fins 126 may be interposed between the plurality of battery cells 121. Each of the plurality of cooling fins 126 may be coupled to a corresponding one of the plurality of battery cells 121. According to embodiments, the plurality of battery cells 121 and the plurality of cooling fins 126 may correspond to each other in a one-to-one fashion.

According to embodiments, one of the plurality of cooling fins 126 may be interposed between adjacent two of the plurality of battery cells 121. According to embodiments, one of the plurality of battery cells 121 may be interposed between adjacent two of the plurality of cooling fins 126.

The plurality of cooling fins 126 may be coupled to the plurality of battery cells 121. The plurality of cooling fins 126 may be coupled to the plurality of battery cells 121 via, for example, an adhesive. The adhesive may be applied between the first part 126V of each of the plurality of cooling fins 126 and the plurality of battery cells 121.

The second part 126H of each of the plurality of cooling fins 126 may be spaced apart from the plurality of battery cells 121. The second part 126H of each of the plurality of cooling fins 126 may cover a terrace 121T of a corresponding of the plurality of battery cells 121. The terraces 121T of the plurality of battery cells 121 may be spaced apart from the second TIM layers 133. The terrace 121T of each of the plurality of battery cells 121 may be isolated from the second TIM layers 133 by the plurality of cooling fins 126. Here, the terrace 121T may be a sealed portion of the pouch case of each of the plurality of battery cells 121. The terrace 121T may be fixed to an accommodation portion of the pouch case via a folding tape.

The center beam 116 may extend in the X-axis direction. The center beam 116 may overlap a central area of the base plate. The center beam 116 may isolate the battery cell assemblies 120 from each other. The center beam 116 may be interposed between the battery cell assemblies 120.

In the present example, the plurality of battery cell assemblies 120 are arranged in two rows and three columns. Accordingly, it may be understood that the plurality of battery cell assemblies 120 are arranged in a 3x2 array. A battery pack including the plurality of battery cell assemblies 120 arranged in an MxN array would be easily derived by those of ordinary skill in the art, based on the above description. Here, M and N are each an integer of 2 or more.

The lid 150 may be coupled to the side walls 112, 113, 114 and 115. The lid 150 may be fixed to the side walls 112, 113, 114, and 115 by a mechanical means such as a bolt. The lid 50 may cover elements, such as the battery cell assemblies 120 and electronic components, inside the battery pack 100. The gasket 140 may be interposed between the lid 150 and the side walls 112, 113, 114, and 115. The gasket may provide a liquid seal to the battery pack 100.

According to embodiments, the lid 150 may be provided by an extrusion process. The lid 150 may include a plurality of cooling channels. The plurality of cooling channels may provide a passage for moving, for example, a coolant such as water. The plurality of cooling channels may be formed by the extrusion process. The plurality of cooling channels may extend in the X-axis direction. The plurality of cooling channels may be spaced apart from each other in the Y-axis direction.

The cooling channels of the lid 150 may be connected to the upper injection pipe 163 and the upper recovery pipe 173. A cooling fluid supplied from the upper injection pipe 163 may flow through the cooling channels and be recovered by the upper recovery pipe 173.

The second TIM layers 133 may be interposed between the lid 150 and the battery cell assemblies 120. The second TIM layers 133 may be heat transfer pads. Each of the second TIM layers 133 may be spaced apart from the plurality of battery cells 121. Each of the second TIM layers 133 may be in contact with the plurality of cooling fins 126. Each of the second TIM layers 133 may be in contact with the second part 126V of the plurality of cooling fins 126. Each of the second TIM layers 133 may be in contact with the lid 150. The second part 126H of each of the plurality of cooling fins 126 may be spaced apart from the lid 150 with the second TIM layers 133 interposed therebetween.

According to a conventional cooling solution, the plurality of battery cells 121 are covered with the second TIM layer 133. In this case, an air layer may be formed between the plurality of battery cells 121 and the second TIM layer 133 due to the terrace 121T of the plurality of battery cells 121, thereby reducing the cooling efficiency of the plurality of battery cells 121.

According to embodiments, the plurality of cooling fins 126 that are in contact with the plurality of battery cells 121 and cover the terrace parts 121T of the plurality of battery cells 121 are provided to efficiently use each of the cooling channels of the base plate 111 and the cooling channels of the lid 150 and improve the cooling efficiency of the battery pack 100. Furthermore, a lower part of each of the plurality of battery cells 121 is in direct contact with the first TIM layers 131 and thus the cooling efficiency of the battery pack 100 may be further improved.

The battery pack 100 may further include exhaust devices coupled to the side wall 115. When a thermal runaway event occurs in the battery pack 100, the exhaust devices may discharge a high-temperature gas and flames from the inside of the battery pack 100 to delay thermal propagation.

Here, a thermal runaway state of the plurality of battery cell assemblies 120 is a state in which a change of temperature of the plurality of battery cell assemblies 120 accelerates the change of temperature, i.e., uncontrollable positive feedback. A temperature of the plurality of battery cell assemblies 120 that are in the thermal runaway state sharply increases, and a large amount of a high-pressure gas and combustion debris are discharged.

The battery pack 100 may further include electronic components. The electronic components may include an electronic device required to drive the battery pack. The electronic components may be on an electronic component mounting region EMR.

The electronic components may include, for example, a battery management system (BMS). The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

The battery pack 100 may further include a plurality of exhaust devices. The plurality of exhaust devices may be installed on one of the lid 150 and the side walls 112, 113, 114, and 115. The plurality of exhaust devices may provide a path for discharging a high-temperature gas from the inside of the battery pack 100 to the outside when the thermal runaway event occurs in some of the plurality of battery cell assemblies 120. Accordingly, thermal propagation may be delayed, and the stability of the battery pack 100 may be improved.

### (Second Embodiment)

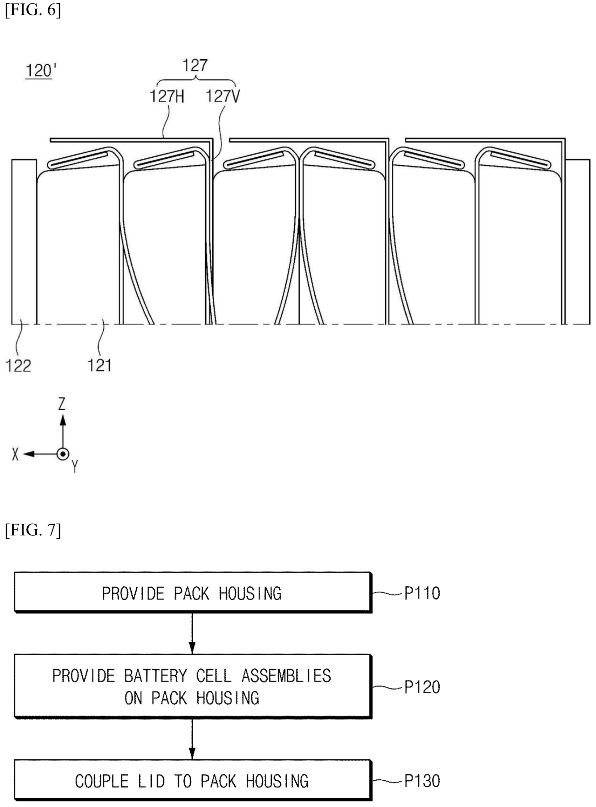

FIG. 6 is a cross-sectional view for describing a battery cell assembly 120' according to other embodiments. More specifically, FIG. 6 illustrates a part corresponding to FIG. 5. The battery cell assembly 120' may replace the battery cell assembly 120 of FIG. 3.

Referring to FIG. 6, the battery cell assembly 120' may include a plurality of battery cells 121, a plurality of pads 122, a first circuit assembly 123 (see FIG. 3), a second circuit assembly 124 (see FIG. 3), a first cross-beam 125a (see FIG. 3), a second cross-beam 125b (see FIG. 3), and a plurality of cooling fins 127.

The plurality of battery cells 121, the plurality of pads 122, the first circuit assembly 123 (see FIG. 3), the second circuit assembly 124 (see FIG. 3), the first cross-beam 125a (see FIG. 3), and the second cross-beam 125b (see FIG. 3) are substantially the same as those described above with reference to FIGS. 1 to 5 and thus redundant description thereof is omitted here.

Each of the plurality of cooling fins 127 may have high thermal conductivity. Each of the plurality of cooling fins 127 may include, for example, a metal material such as aluminum and stainless steel.

Each of the plurality of cooling fins 127 may have an L-shape. The shape of each of the plurality of cooling fins 127 may be different from a C-shape. Each of the plurality of cooling fins 127 may include a first part 127V substantially parallel to the Z-axis direction and a second part 127H substantially perpendicular to the Z-axis direction. Each of the plurality of cooling fins 127 may be spaced apart from the first TIM layers 131 (see FIG. 2) between the plurality of battery cells 121 and the base plate 111 (see FIG. 2). Each of the plurality of cooling fins 127 may not include a part interposed between the plurality of battery cells 121 and the base plate 111 (see FIG. 2).

A length of the second part 127H of each of the plurality of cooling fins 127 in the X-axis direction may be different from a length of each of the plurality of battery cells 121 in the X-axis direction. The length of the second part 127H of each of the plurality of cooling fins 127 in the X-axis direction may be greater than the length of each of the plurality of battery cells 121 in the X-axis direction. Accordingly, the second part 127H of each of the plurality of cooling fins 127 may cover two or more battery cells 121. The length of the second part 127H of each of the plurality of cooling fins 127 in the X-axis direction may be less than N times the length of each of the battery cells 121 in the X-axis direction (here, N is the number of battery cells 121 covered with each of the plurality of cooling fins 127). Accordingly, interference between the plurality of cooling fins 127 may be prevented when the plurality of battery cells 121 are coupled to each other.

For example, as shown in FIG. 6, when the second part 127H of each of the plurality of cooling fins 127 covers two battery cells 121, the length of the second part 127H of each of the plurality of cooling fins 127 in the X-axis direction may be less than twice the length of each of the battery cells 121 in the X-axis direction.

A length of the first part 127V of each of the plurality of cooling fins 127 in the Z-axis direction may be different from a length of each of the plurality of battery cells 121 in the Z-axis direction. The length of the first part 127V of each of the plurality of cooling fins 127 in the Z-axis direction may be greater than the length of each of the plurality of battery cells 121 in the Z-axis direction but embodiments are not limited thereto. The length of the first part 127V of each of the plurality of cooling fins 127 in the Z-axis direction may be equal to or less than the length of each of the plurality of battery cells 121 in the Z-axis direction.

The plurality of cooling fins 127 may be interposed between the plurality of battery cells 121. The first part 127V of each of the plurality of cooling fins 127 may be interposed between the plurality of battery cells 121. Each of the plurality of cooling fins 127 may be coupled to a corresponding one of the plurality of battery cells 121. According to embodiments, the plurality of battery cells 121 and the plurality of cooling fins 127 may correspond in a many-to-one (e.g., two-to-one) fashion.

According to embodiments, one of the plurality of cooling fins 126 may be interposed between adjacent two of the plurality of battery cells 121. According to embodiments, two or more of the plurality of battery cells 121 may be interposed between adjacent two of the plurality of cooling fins 127.

According to embodiments, the plurality of cooling fins 127 may be in contact with two of the plurality of battery cells 121. Accordingly, the energy density of the battery cell assembly 120' may be increased, compared to a case in which the plurality of cooling fins 127 are coupled to each of the plurality of battery cells 121.

The plurality of cooling fins 127 may be coupled to the plurality of battery cells 121. The plurality of cooling fins 127 may be coupled to the plurality of battery cells 121 via, for example, an adhesive. The adhesive may be applied between the first part 127V of each of the plurality of cooling fins 126 and the plurality of battery cells 121.

The second part 127H of each of the plurality of cooling fins 127 may be spaced apart from the plurality of battery cells 121. The second part 127H of each of the plurality of cooling fins 127 may cover a terrace 121T of a corresponding of the plurality of battery cells 121. The second part 127H of each of the plurality of cooling fins 127 may cover terraces 121T of two or more of the plurality of battery cells 121.

### (Third Embodiment)

FIG. 7 is a flowchart of a method of assembling a battery pack 100 according to other embodiments.

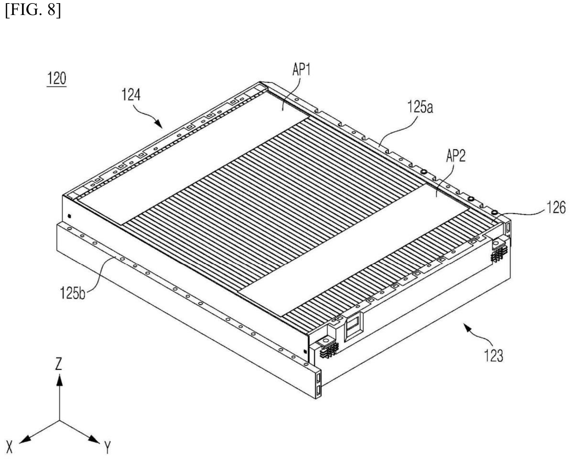

FIG. 8 is a perspective view for describing a method of assembling the battery pack 100 according to other embodiments.

Referring to FIGS. 2 and 7, in P110, the pack housing 110 may be provided. The provision of the pack housing 110 may include applying the first TIM layers 131 to the pack housing 110.

Next, referring to FIGS. 2, 7 and 8, the plurality of battery cell assemblies 120 may be provided on the pack housing 110. In order to provide the plurality of battery cell assemblies 120 on the pack housing 110, the first part AP1 and the second part AP2 of each of the plurality of cooling fins 126 may be adsorbed as shown in FIG. 8. According to embodiments, the plurality of cooling fins 126 have relatively high rigidity and thus may be used to transfer the plurality of battery cell assemblies 120 using adsorption. Furthermore, a uniform force is applied to the plurality of battery cells 121 of each of the plurality of battery cell assemblies 120 during the transfer of each of the plurality of battery cell assemblies 120 to prevent damage to the plurality of battery cells 121 in an assembly process of the battery pack 100.

Then, referring to FIGS. 1 and 7, in P130, the pack housing 110 and the lid 150 may be coupled to each other. The pack housing 110 and the lid 150 may be coupled to each other by a mechanical method such as bolting.

### (Fourth Embodiment)

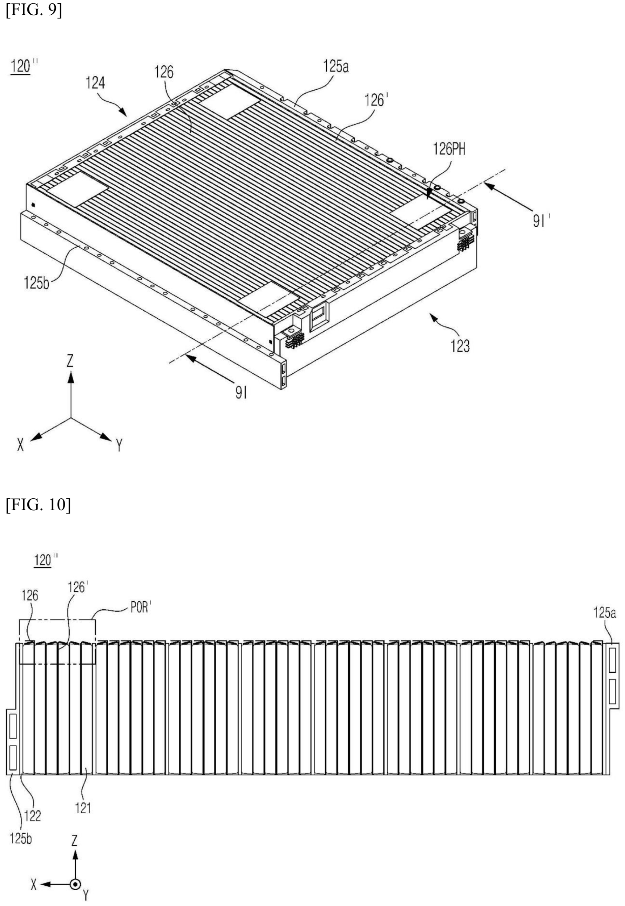

FIG. 9 illustrates a battery cell assembly 120" according to other embodiments.

FIG. 10 is a cross-sectional view taken along line 9I-9I' of FIG. 9.

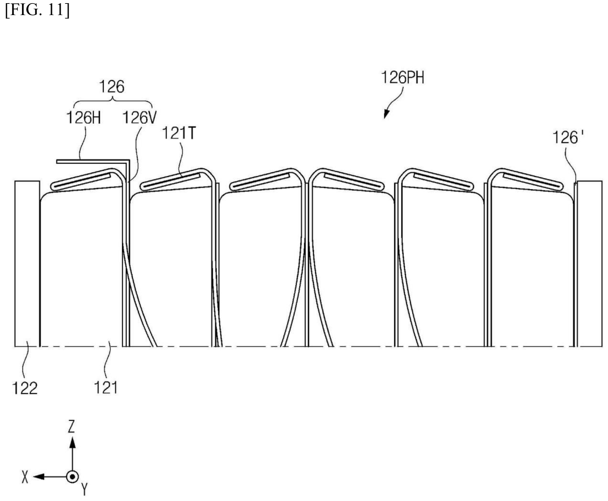

FIG. 11 is an enlarged partial cross-sectional view of a part POR' of FIG. 10.

Referring to FIGS. 9 to 11, each of a plurality of battery cell assemblies 120 may include a plurality of battery cells 121, a plurality of pads 122, a first circuit assembly 123, a second circuit assembly 124, a first cross-beam 125a (see FIG. 3), a second cross-beam 125b (see FIG. 3), and a plurality of cooling fins 126 and 126'.

The plurality of battery cells 121, the plurality of pads 122, the first circuit assembly 123, the second circuit assembly 124, the first cross-beam 125a (see FIG. 3), the second cross-beam 125b (see FIG. 3), and the plurality of cooling fins 126 are substantially the same as those described above with reference to FIGS. 1 to 5 and thus redundant description thereof is omitted here.

The cooling fins 126' may be at an edge in the X-axis direction. Each of the plurality of cooling fins 126' may include a pinhole 126PH. The pinhole 126PH of each of the plurality of cooling fins 126' may partially expose neighboring ones of the plurality of battery cells 121.

In FIG. 7, in P120, when the battery cell assembly 120" is provided on the pack housing 110, the pinhole 126PH of each of the plurality of cooling fins 126' may be used. The pinhole 126PH of each of the cooling fins 126' may be used to transfer the battery cell assembly 120". More specifically, a lifting jig may be inserted into the cooling fins 126' through the pinhole 126PH of each of the cooling fins 126', and the battery cell assembly 120" may be transferred.

The present disclosure has been described above in more detail with reference to the drawings, the embodiments, etc. However, the configurations illustrated in the drawings or embodiments described in the present specification are only embodiments of the present disclosure and do not reflect all the technical ideas of the present disclosure and thus it should be understood that various equivalents and modifications that replace the configurations would have been made at the filing date of the present application.

## Claims

1. A battery pack comprising:
a pack housing including a base plate and side walls;
a plurality of battery cell assemblies on the base plate;
a plurality of first thermal interface material (TIM) layers between the plurality of battery cell assemblies and the pack housing;
a lid coupled to the side walls; and
second TIM layers between the lid and the plurality of battery cell assemblies,
wherein each of the plurality of battery cell assemblies includes:
a plurality of battery cells arranged in a first direction; and
a plurality of cooling fins provided between the plurality of battery cells and each having an L-shape.

2. The battery pack of claim 1, wherein each of the plurality of cooling fins includes a first part perpendicular to the first direction and a second part connected to the first part and parallel to the first direction.

3. The battery pack of claim 2, wherein a length of the second part of each of the plurality of cooling fins in the first direction is different from a length of the plurality of battery cells in the first direction.

4. The battery pack of claim 2, wherein a length of the second part of each of the plurality of cooling fins in the first direction is less than a length of the plurality of battery cells in the first direction.

5. The battery pack of claim 2, wherein a length of the second part of each of the plurality of cooling fins in the first direction is greater than a length of the plurality of battery cells in the first direction.

6. The battery pack of claim 2, wherein a length of the second part of each of the plurality of cooling fins in the first direction is less than twice a length of the plurality of battery cells in the first direction.

7. The battery pack of claim 2, wherein the second TIM layers are in contact with the lid and the second part of the plurality of cooling fins of the plurality of battery cell assemblies.

8. The battery pack of claim 7, wherein the second part of the plurality of cooling fins is spaced apart from the lid with the second TIM layers interposed between the second part and the lid.

9. The battery pack of claim 7, wherein each of the plurality of battery cells includes a terrace that is a sealed part, and
the plurality of cooling fins cover the terrace of a corresponding one of the plurality of battery cells.

10. The battery pack of claim 9, wherein the terrace of each of the plurality of battery cells is spaced apart from the second TIM layers.

11. The battery pack of claim 1, wherein each of the plurality of cooling fins includes aluminum or stainless steel.

12. The battery pack of claim 1, wherein each of the plurality of cooling fins is fixed to a corresponding one of the plurality of battery cells via an adhesive.

13. The battery pack of claim 1, wherein a shape of each of the plurality of cooling fins is different from a C-shape.

14. The battery pack of claim 1, wherein each of the plurality of cooling fins is spaced apart from the base plate.

15. The battery pack of claim 1, wherein each of the plurality of cooling fins is spaced apart from the first TIM layers.
